# EUROPÄISCHE PATENTSCHRIFT

(11) **EP 3 934 944 B1**
(45) Veröffentlichungstag und Bekanntmachung des Hinweises auf die Patenterteilung: **22.01.2025**
(21) Anmeldenummer: 20710086.8
(22) Anmeldetag: 03.03.2020
(51) Int. Cl.: B60Q 5/00

(54) **HUPENBAUGRUPPE, VERFAHREN ZU DEREN HERSTELLUNG SOWIE FAHRZEUGLENKVORRICHTUNG MIT EINER SOLCHEN HUPENBAUGRUPPE**
HORN ASSEMBLY, METHOD FOR PRODUCING SAME, AND VEHICLE STEERING APPARATUS HAVING A HORN ASSEMBLY OF THIS KIND
ENSEMBLE KLAXON, SON PROCÉDÉ DE PRODUCTION ET DISPOSITIF DE DIRECTION DE VÉHICULE COMPORTANT UN TEL ENSEMBLE KLAXON

(30) Priorität: 07.03.2019 DE 102019105802
(43) Veröffentlichungstag der Anmeldung: 12.01.2022
(73) Patentinhaber: ZF Automotive Safety Germany GmbH, 63743 Aschaffenburg (DE)
(72) Erfinder: SCHÜTZ, Dominik, 63872 Heimbuchenthal (DE); MAY, Stefan, 63743 Aschaffenburg (DE)
(74) Vertreter: ZF LIFETEC Intellectual Property
(86) Internationale Anmeldenummer: PCT/EP2020/055561
(87) Internationale Veröffentlichungsnummer: WO 2020/178286

(56) Entgegenhaltungen:
- WO-A1-00/74980
- DE-A1- 102008 000 224
- DE-A1- 102011 018 643
- DE-A1- 102014 003 422
- DE-B4- 102008 000 224
- JP-A- H0 958 393
- US-A1- 2005 017 484

## Beschreibung

Die Erfindung betrifft eine Hupenbaugruppe einer Fahrzeuglenkvorrichtung mit den Merkmalen im Oberbegriff des Anspruchs 1, ein Verfahren zu deren Herstellung und eine Fahrzeuglenkvorrichtung mit einer solchen Hupenbaugruppe.

Fahrzeuglenkvorrichtungen sind üblicherweise mit einer Hupenbaugruppe versehen, damit ein Fahrer des Fahrzeugs durch Betätigen der Hupenbaugruppe bei Bedarf ein akustisches Signal auslösen kann.

Generell kann die Hupenbaugruppe überall an der Lenkvorrichtung angeordnet sein, wobei der Fahrer intuitiv zumeist eine Hupenbetätigung im Zentrum der Lenkvorrichtung erwartet, sodass die Hupenbaugruppe oftmals im Nabenabschnitt der Lenkvorrichtung vorgesehen ist.

Im Nabenabschnitt der Lenkvorrichtung befindet sich häufig auch ein Frontgassackmodul für den Fahrer, sodass die Integration einer Hupenbaugruppe in diesem Bereich technisch nicht trivial ist. Je nach Fahrzeugmodell unterscheiden sich die Lenkvorrichtungen und Gassackmodule in Form und Größe, sodass die Hupenbaugruppe jeweils aufwendig angepasst werden muss. Zudem ist das Vorhalten speziell geformter Komponenten der Hupenbaugruppe für die unterschiedlichen Fahrzeugmodelle logistisch aufwendig und kostenintensiv.

Eine Fahrzeuglenkvorrichtung der gattungsgemäßen DE 10 2014 003 422 A1 umfasst bereits eine Hupenbaugruppe mit den Merkmalen im Oberbegriff des Anspruchs 1, wobei eine Vorrichtung zur Befestigung eines Gassackmoduls vorgesehen ist, welche mittels Führungshülsen sowohl eine Führungsfunktion für das Gassackmodul als auch eine Hupfunktion in vorteilhafter Weise vereint.

Aufgabe der Erfindung ist die Schaffung einer Hupenbaugruppe für eine Fahrzeuglenkvorrichtung, die möglichst einfache und universell einsetzbare Komponenten umfasst sowie schnell und mit geringem Aufwand herstellbar ist.

Erfindungsgemäß wird die Aufgabe gelöst durch eine Hupenbaugruppe mit einem elektrisch nicht-leitfähigen Trägerelement, einem langgestreckten, flexiblen elektrischen Leiter, der am Trägerelement angeordnet sind, einem elektrisch leitenden Bauteil, das mit dem flexiblen elektrischen Leiter in Kontakt steht und einen ersten Hupenkontakt bildet, sowie einem zweiten Hupenkontakt, der in einer Grundstellung der Hupenbaugruppe vom ersten Hupenkontakt beabstandet und in einer Betätigungsstellung der Hupenbaugruppe mit dem ersten Hupenkontakt elektrisch verbunden ist, wobei das elektrisch leitende Bauteil als elektrisch leitender Clip (22) ausgebildet und am Trägerelement (18) verrastet ist, um den ersten Hupenkontakt an einer beliebigen, gewünschten Stelle entlang des flexiblen elektrischen Leiters (20) zu realisieren. Durch den langgestreckten, flexiblen elektrischen Leiter lässt sich die Hupenbaugruppe schnell und einfach an die Form und Größe des Trägerelements anpassen, wobei das Trägerteil zum Beispiel ein Modulgehäuse eines Frontgassackmoduls oder eine Kunststoffblende der Fahrzeuglenkvorrichtung sein kann. Über das einfache Verrasten des elektrisch leitenden Clips mit dem Trägerelement wird dieser mit dem flexiblen elektrischen Leiter verbunden, sodass sich der erste Hupenkontakt mit geringem Aufwand an einer beliebigen, gewünschten Stelle entlang des flexiblen elektrischen Leiters realisieren lässt.

Gemäß einer bevorzugten Ausführungsform der Hupenbaugruppe ist der langgestreckte, flexible elektrische Leiter ein Kabel, welches eine elektrisch leitende Ader und in einer Längsrichtung des Leiters zumindest abschnittsweise eine elektrisch isolierende Ummantelung aufweist. Derartige Kabel sind preiswert erhältlich, lassen sich einfach auf eine gewünschte Länge zuschneiden und durch plastisches Verformen mit geringem Aufwand an eine Geometrie des Trägerelements anpassen.

Der Clip kann in dieser Ausführungsform eine Schneide zum Einschneiden in die elektrisch isolierende Ummantelung aufweisen, wobei die Schneide im zusammengebauten Zustand der Hupenbaugruppe die elektrisch leitende Ader berührt. Die Schneide ist vorzugsweise einstückig an den Clip angeformt und stellt beim Verrasten des Clips am Trägerelement den Kontakt zum elektrischen Leiter, konkret zur elektrisch leitenden Ader des Kabels her.

Alternativ ist auch denkbar, dass der Clip eine Federzunge aufweist und das Kabel im Montagebereich des Clips ohne elektrisch isolierende Ummantelung ausgebildet ist, wobei die Federzunge im zusammengebauten Zustand der Hupenbaugruppe die elektrisch leitende Ader berührt. Die Federzunge ist vorzugsweise einstückig an den Clip angeformt und stellt beim Verrasten des Clips am Trägerelement den Kontakt zum elektrischen Leiter, konkret zur elektrisch leitenden Ader des Kabels her.

Der elektrisch leitende Clip kann eine einstückig angeformte, elastische Lasche zur Beaufschlagung der Hupenbaugruppe in ihre Grundstellung und/oder zur elektrischen Kontaktierung des zweiten Hupenkontakts aufweisen. Diese Lasche gewährleistet oder kann zumindest dazu beitragen, dass sich die Hupenbaugruppe im unbetätigten Zustand in einer definierten Grundstellung befindet. Ferner lässt sich über diese Lasche auch eine Betätigungskraft der Hupenbaugruppe beeinflussen. Alternativ oder zusätzlich kann die elastische Lasche in der Betätigungsstellung der Hupenbaugruppe insbesondere so verformt sein, dass sie den zweiten Hupenkontakt berührt und somit die elektrische Verbindung zwischen den beiden Hupenkontakten herstellt.

Der Clip ist im Übrigen bevorzugt ein Biegestanzteil aus Blech, beispielsweise aus Federstahl. Dadurch ist der Clip sehr einfach, preiswert und schnell herstellbar.

Gemäß einer weiteren Ausführungsform der Hupenbaugruppe ist ein weiterer langgestreckter, flexibler elektrischer Leiter vorgesehen, wobei der zweite Hupenkontakt durch einen weiteren elektrisch leitenden Clip gebildet ist, der mit dem weiteren langgestreckten, flexiblen elektrischen Leiter in Kontakt steht. Gemäß einer speziellen Ausführungsvariante können die beiden Clips als Gleichteile ausgeführt sein, um die Anzahl der unterschiedlichen Einzelbauteile zu minimieren.

In dieser Ausführungsform können die beiden langgestreckten, flexiblen elektrischen Leiter an demselben elektrisch nicht-leitfähigen Trägerelement angeordnet und die beiden elektrisch leitenden Clips an demselben elektrisch nicht-leitfähigen Trägerelement verrastet sein.

Alternativ ist auch denkbar, dass ein weiteres elektrisch nicht-leitfähiges Trägerelement vorgesehen ist, wobei der weitere langgestreckte, flexible elektrische Leiter an dem weiteren Trägerelement angeordnet und der weitere elektrisch leitende Clip an dem weiteren Trägerelement verrastet ist.

Die Erfindung umfasst ferner eine Fahrzeuglenkvorrichtung mit einem Lenkvorrichtungsskelett, einem Gassackmodul und einer oben beschriebenen Hupenbaugruppe, wobei wenigstens ein Trägerelement der Hupenbaugruppe einstückig mit einer skelettfesten Lenkvorrichtungsblende oder einem Modulgehäuse des Gassackmoduls ausgeführt ist.

Schließlich umfasst die Erfindung auch ein Verfahren zur Herstellung einer oben beschriebenen Hupenbaugruppe, welches die folgenden Schritte umfasst:
a) Bereitstellen eines nicht-leitfähigen Trägerelements;
b) Montage des langgestreckten, flexiblen elektrischen Leiters am Trägerelement, wobei der elektrische Leiter insbesondere als Kabel ausgebildet ist; und
c) Zuführen des elektrisch leitenden Clips an einer beliebigen, gewünschten Stelle entlang des flexiblen elektrischen Leiters in einer quer zur Längsrichtung des elektrischen Leiters verlaufenden Montagerichtung bis der Clip in einer Endmontageposition mit dem Trägerelement verrastet, wobei der Clip beim Zuführen in Montagerichtung mit dem elektrischen Leiter einen elektrischen Kontakt ausbildet.

Gemäß einer bevorzugten Verfahrensvariante ist der langgestreckte, flexible elektrische Leiter ein Kabel, welches eine elektrisch leitende Ader und in einer Längsrichtung des Leiters eine elektrisch isolierende Ummantelung aufweist, wobei der zugeordnete Clip eine Schneide aufweist, welche im Schritt c) in die Ummantelung einschneidet, bis sie in der Endmontageposition die elektrische Ader berührt.

Gemäß einer alternativen Ausführungsvariante ist der langgestreckte, flexible elektrische Leiter ein Kabel, welches eine elektrisch leitende Ader und in einer Längsrichtung des Leiters eine elektrisch isolierende Ummantelung aufweist, wobei die Ummantelung im Montagebereich des zugeordneten Clips ausgespart ist und der Clip eine Federzunge aufweist, welche im Schritt c) gegen die freiliegende elektrische Ader beaufschlagt wird und die Ader in der Endmontageposition berührt.

Folglich ist die Hupenbaugruppe mit Clips und Kabeln nicht nur aus einfachen Komponenten zusammengesetzt, welche problemlos an äußere Randbedingungen anpassbar und variabel zusammensetzbar sind, sondern überdies auch mit minimalem Aufwand herstellbar. So wird der Clip durch eine einfache Rastverbindung an einer gewünschten Stelle des Trägers befestigt und bei der Verrastung gleichzeitig mit dem zugeordneten elektrischen Leiter in Kontakt gebracht. Werkzeuge oder Befestigungsmittel, beispielsweise Schrauben, werden aufgrund der Rastverbindung nicht benötigt. Ferner sind aufgrund der elektrischen Kontaktierung des Clips über die Schneide oder die Federzunge keine aufwendigen Schweiß- oder Lötverbindungen notwendig.

Weitere Merkmale und Vorteile der Erfindung ergeben sich aus der nachfolgenden Beschreibung bevorzugter Ausführungsformen unter Bezugnahme auf die Zeichnungen. In diesen zeigt:
- Figur 1 eine perspektivische Explosionsansicht einer erfindungsgemäßen Fahrzeuglenkvorrichtung mit einer erfindungsgemäßen Hupenbaugruppe;
- Figur 2 einen Schnitt durch die Fahrzeuglenkvorrichtung gemäß Figur 1;
- Figur 3 den Ablauf eines erfindungsgemäßen Verfahrens zur Herstellung einer Hupenbaugruppe gemäß einer Ausführungsform;
- Figur 4 den Ablauf eines erfindungsgemäßen Verfahrens zur Herstellung einer Hupenbaugruppe gemäß einer weiteren Ausführungsform;
- Figur 5 eine perspektivische Ansicht eines Trägerelements einer erfindungsgemäßen Hupenbaugruppe vor einer Clip-Montage;
- Figur 6 eine perspektivische Ansicht des Trägerelements gemäß Figur 5 nach der Montage zweier flexibler elektrischer Leiter und eines Clips;
- Figur 7 eine perspektivische Ansicht des Trägerelements gemäß Figur 6 nach der Montage eines weiteren Clips;
- Figur 8 eine perspektivische Ansicht einer erfindungsgemäßen Hupenbaugruppe gemäß einer weiteren Ausführungsvariante;
- Figur 9 eine perspektivische Ansicht einer erfindungsgemäßen Hupenbaugruppe gemäß einer weiteren Ausführungsvariante;
- Figur 10 einen Schnitt durch eine Fahrzeuglenkvorrichtung mit einer erfindungsgemäßen Hupenbaugruppe gemäß einer weiteren Ausführungsvariante; und
- Figur 11 eine perspektivische Ansicht einer erfindungsgemäßen Hupenbaugruppe gemäß noch einer weiteren Ausführungsvariante.

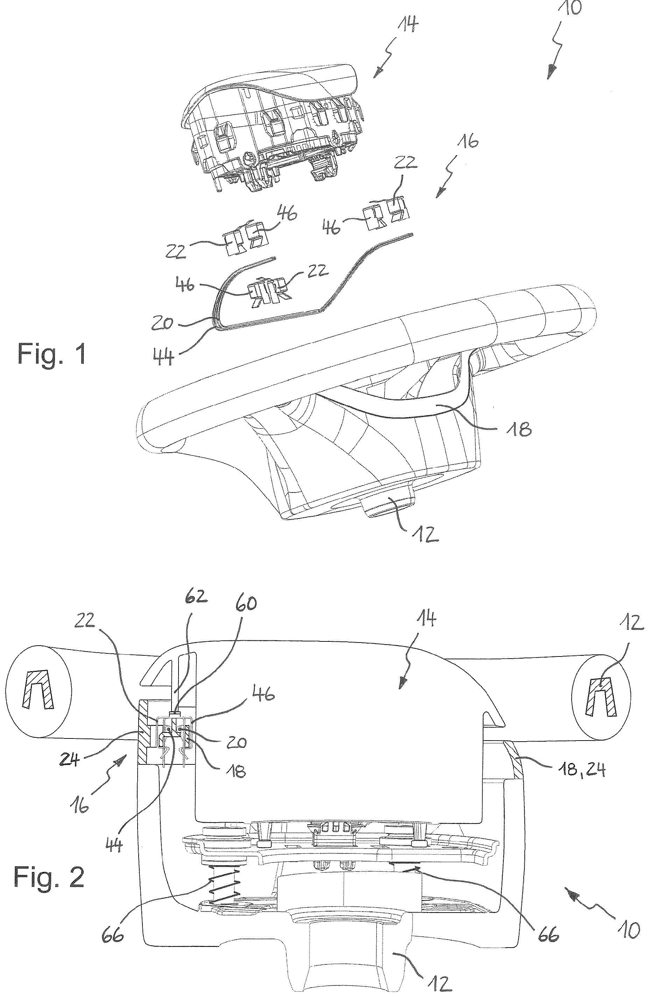

Die Figuren 1 und 2 zeigen eine Fahrzeuglenkvorrichtung 10, konkret eine Lenkradeinheit eines Kraftfahrzeugs, mit einem Lenkvorrichtungsskelett 12, einem Gassackmodul 14 und einer Hupenbaugruppe 16.

Die Hupenbaugruppe 16 der Fahrzeuglenkvorrichtung 10 umfasst ein elektrisch nicht-leitfähiges Trägerelement 18, einen langgestreckten, flexiblen elektrischen Leiter 20, der am Trägerelement 18 angeordnet ist, einen elektrisch leitenden, elastischen Clip 22, der mit dem flexiblen elektrischen Leiter 20 in Kontakt steht, am Trägerelement 18 verrastet ist und einen ersten Hupenkontakt bildet, sowie einen zweiten Hupenkontakt, der in einer Grundstellung der Hupenbaugruppe 16 vom ersten Hupenkontakt beabstandet und in einer Betätigungsstellung der Hupenbaugruppe 16 mit dem ersten Hupenkontakt elektrisch verbunden ist.

Das Trägerelement 18 ist bevorzugt aus einem Kunststoff hergestellt und in der Ausführungsform der Hupenbaugruppe 16 gemäß den Figuren 1 und 2 einstückig in eine skelettfeste Lenkvorrichtungsblende 24 integriert. Alternativ kann das Trägerelement 18 aber beispielsweise auch einstückig mit dem Gassackmodul 14, insbesondere einem Modulgehäuse des Gassackmoduls 14 ausgeführt sein.

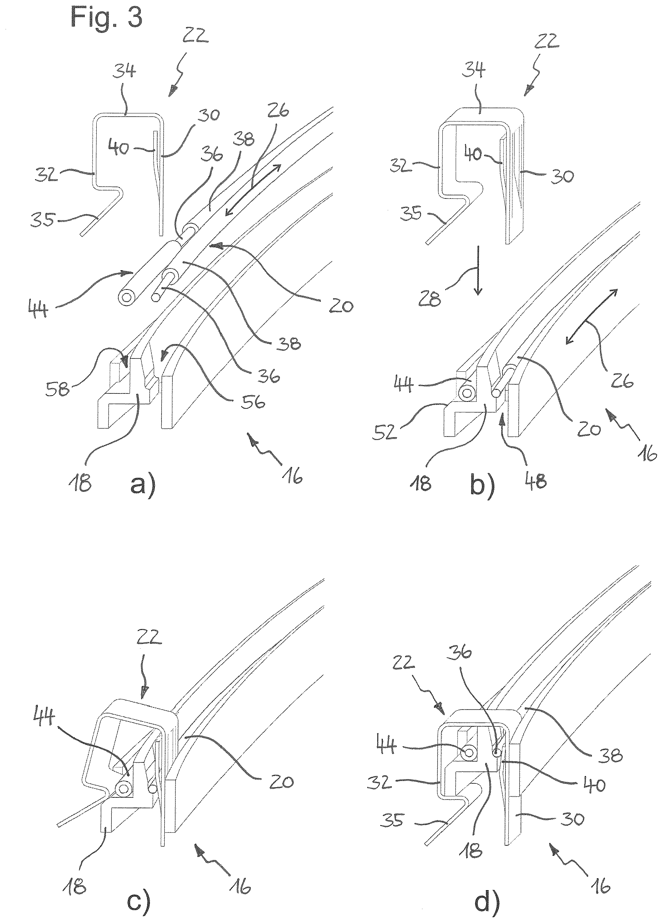

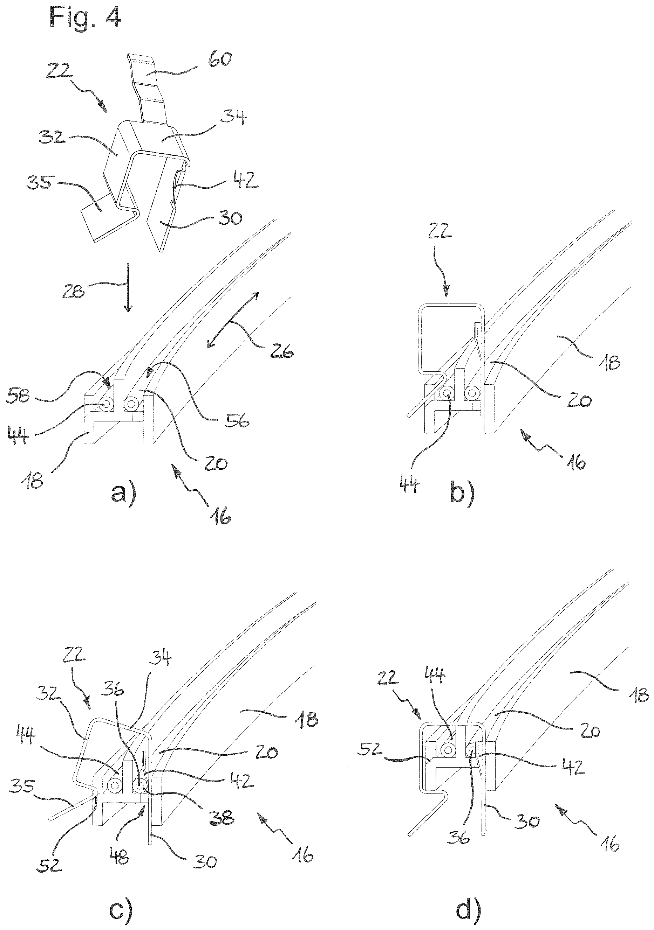

Die Figuren 3 und 4 illustrieren jeweils eine Abfolge von Verfahrensschritten zur Herstellung der Hupenbaugruppe 16, insbesondere zur mechanischen Verrastung des Clips 22 am Trägerelement 18 und gleichzeitigen Herstellung eines elektrischen Kontakts zwischen dem Clip 22 und dem langgestreckten, flexiblen elektrischen Leiter 20.

Dabei wird in einem Verfahrensschritt a) zunächst das nicht-leitfähige Trägerelement 18 bereitgestellt, an dem in einem Verfahrensschritt b) der langgestreckte, flexible elektrische Leiter 20 montiert wird.

In einem Verfahrensschritt c) wird der elektrisch leitende Clip 22 in einer quer zur Längsrichtung 26 des elektrischen Leiters 20 verlaufenden Montagerichtung 28 zugeführt, bis der Clip 22 in einer Endmontageposition mit dem Trägerelement 18 verrastet, wobei der Clip 22 beim Zuführen in Montagerichtung 28 mit dem elektrischen Leiter 20 einen elektrischen Kontakt ausbildet. Der Clip 22 ist im Wesentlichen U-förmig ausgebildet und weist zwei einander gegenüberliegende Schenkel 30, 32 sowie einen Steg 34 auf, welcher die Schenkel 30, 32 verbindet. Einer der Schenkel 30, 32 weist einen schräg zur Montagerichtung 28 verlaufenden Schenkelabschnitt 35 auf, sodass sich der U-förmige Clip 22 beim Zuführen in Montagerichtung 28 aufweitet. Bei Erreichen der Endmontageposition schnappt der Clip 22 zurück und bildet mit dem Trägerelement 18 eine Rastverbindung aus, durch die der Clip 22 am Trägerelement 18 fixiert ist.

In der Verfahrensvariante gemäß Figur 3 ist der langgestreckte, flexible elektrische Leiter 20 ein Kabel, welches eine elektrisch leitende Ader 36 und in Längsrichtung 26 des Leiters 20 eine elektrisch isolierende Ummantelung 38 aufweist, wobei die Ummantelung 38 im Montagebereich des zugeordneten Clips 22 ausgespart ist und der Clip 22 eine Federzunge 40 aufweist, welche im Schritt c) gegen die freiliegende, elektrisch leitende Ader 36 beaufschlagt wird und die Ader 36 in der Endmontageposition gemäß Figur 3d) berührt.

Der Clip 22 ist in diesem Fall insbesondere als Biegestanzteil aus einem Blech hergestellt, beispielsweise aus Federstahl, wobei die Federzunge 40 einstückig an den Clip 22 angeformt ist und im zusammengebauten Zustand der Hupenbaugruppe 16 mit der elektrisch leitenden Ader 36 in Kontakt steht. Konkret weist der eine Schenkel 32 des U-förmigen Clips 22 den schräg zur Montagerichtung 28 verlaufenden Schenkelabschnitt 35 und der andere Schenkel 30 des Clips 22 die Federzunge 40 auf.

In der alternativen Verfahrensvariante gemäß Figur 4 ist der langgestreckte, flexible elektrische Leiter 20 ebenfalls ein Kabel, welches wenigstens eine elektrisch leitende Ader 36 und in Längsrichtung 26 des Leiters 20 eine elektrisch isolierende Ummantelung 38 aufweist, wobei der zugeordnete Clip 22 statt der Federzunge 40 eine Schneide 42 aufweist, welche im Schritt c) in die Ummantelung 38 einschneidet, bis sie in der Endmontageposition gemäß Figur 4d) die elektrisch leitende Ader 36 berührt.

Auch in diesem Fall ist der Clip 22 insbesondere als Biegestanzteil aus einem Blech hergestellt, beispielsweise aus Federstahl, wobei die Schneide 42 einstückig an den Clip 22 angeformt ist und im zusammengebauten Zustand der Hupenbaugruppe 16 mit der elektrisch leitenden Ader in Kontakt steht. Konkret weist der eine Schenkel 32 des U-förmigen Clips 22 den schräg zur Montagerichtung 28 verlaufenden Schenkelabschnitt 35 und der andere Schenkel 30 des Clips 22 die Schneide 42 auf.

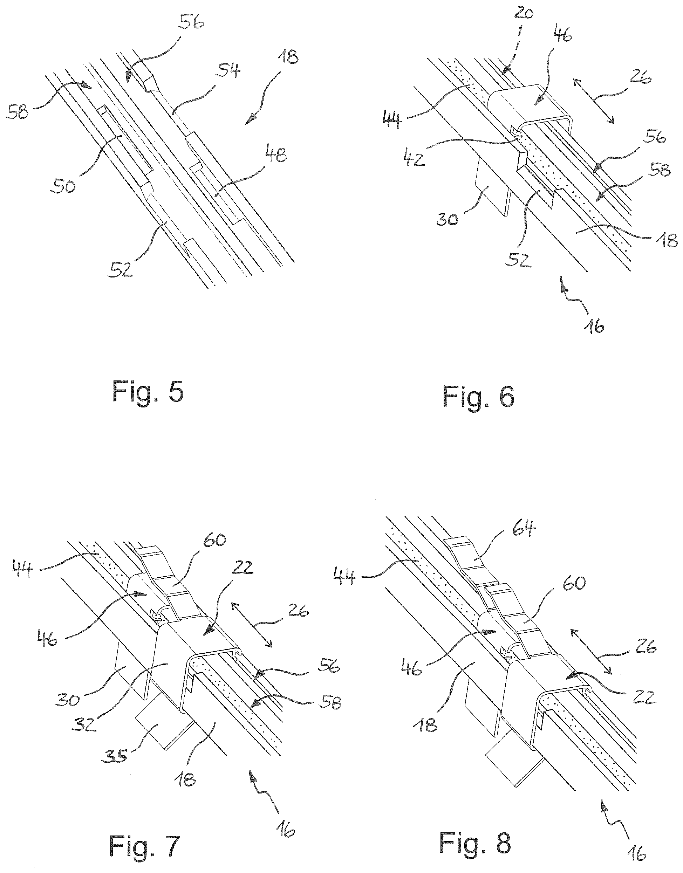

Die Figuren 5 bis 7 zeigen die Herstellung bzw. den Zusammenbau einer Hupenbaugruppe 16, die einen weiteren langgestreckten, flexiblen elektrischen Leiter 44 aufweist (gepunktet hervorgehoben), wobei der zweite Hupenkontakt durch einen weiteren elektrisch leitenden Clip 46 gebildet ist, der im zusammengebauten Zustand der Hupenbaugruppe 16 mit dem weiteren langgestreckten, flexiblen elektrischen Leiter 44 in Kontakt steht. Der elektrische Leiter 20 ist aufgrund der Perspektive in den Figuren 5 bis 7 nicht zu erkennen, weshalb diesbezüglich auf die Figuren 3 und 4 verwiesen wird.

In Figur 5 ist ein Ausschnitt des elektrisch nicht-leitfähigen Trägerelements 18 im Montagebereich der beiden Clips 22, 46 dargestellt. Hierbei sind Öffnungen 48, 50 zu erkennen, durch die sich im zusammengebauten Zustand der Hupenbaugruppe 16 die Schenkel 30 der Clips 22, 46 erstrecken. Jeweils gegenüberliegend sind abgefaste Kanten 52, 54 vorgesehen, an welchen die Schenkelabschnitte 35 der Clips 22, 46 bei der Clip-Montage entlanggleiten.

Gemäß Figur 6 sind die beiden langgestreckten, flexiblen elektrischen Leiter 20, 44 in Aussparungen 56, 58 des Trägerelements 18 eingelegt und der Clip 46 ist bereits am Trägerelement 18 montiert. Schließlich wird dann der Clip 22 montiert, sodass die beiden Clips 22, 46 in Längsrichtung 26 der elektrischen Leiter 20, 44 gemäß Figur 7 hintereinander angeordnet sind. Die Montage der Clips 22, 46 erfolgt dabei jeweils wie in Figur 4 dargestellt.

Anhand der Figur 7 wird deutlich, dass die beiden langgestreckten, flexiblen elektrischen Leiter 20, 44 an demselben elektrisch nicht-leitfähigen Trägerelement 18 angeordnet und die beiden elektrisch leitenden Clips 22, 46 an demselben elektrisch nicht-leitfähigen Trägerelement 18 verrastet sind.

Gemäß den Figuren 4a) und 7 weist der als erster Hupenkontakt fungierende Clip 22, konkret der Steg 34 des U-förmigen Clips 22, eine einstückig angeformte, elastische Lasche 60 auf, welche in einem unbelasteten Zustand von dem als zweiten Hupenkontakt fungierenden weiteren Clip 46 beabstandet ist. Dies entspricht der Grundstellung der Hupenbaugruppe 16, wie sie auch in Figur 2 dargestellt ist.

Bei einer Betätigung der Fahrzeughupe wird die elastische Lasche 60 durch ein Betätigungselement 62 so verformt, dass sie in der Betätigungsstellung der Hupenbaugruppe 16 den zweiten Hupenkontakt berührt, wodurch ein Hupenstromkreis geschlossen ist und folglich ein Hupsignal ausgelöst wird. Das Betätigungselement 62 ist beispielsweise am Gassackmodul 14 ausgebildet und gemäß Figur 2 insbesondere als Fortsatz am Modulgehäuse des Gassackmoduls 14 ausgeführt.

Neben der elektrischen Kontaktierung unterstützt die elastische Lasche 60 ferner eine Rückstellung der Hupenbaugruppe 16 in ihre Grundstellung.

Die Figur 8 zeigt eine weitere Ausführungsvariante der Hupenbaugruppe 16, welche sich von der Ausführungsvariante gemäß Figur 7 lediglich dadurch unterscheidet, dass auch der weitere Clip 46 eine elastische Lasche 64 aufweist. Diese Lasche 64 hat dabei jedoch keine elektrische Kontaktierungsfunktion, sondern unterstützt lediglich die Rückstellung der Hupenbaugruppe 16 in ihre Grundstellung.

Diese erhöhte Rückstellkraft der Laschen 60, 64 reicht dabei unter Umständen bereits für ein zuverlässiges Erreichen der Grundstellung aus, sodass auf weitere Rückstellelemente verzichtet werden kann. Dies ist insbesondere für Fahrzeuglenkvorrichtungen 10 denkbar, bei denen die Fahrzeughupe durch eine Relativbewegung zwischen einer Modulkappe und einem Modulboden des Gassackmoduls 14 betätigt wird. Das Trägerelement 18 wäre dann bevorzugt in den Modulboden und das Betätigungselement 62 in die Modulkappe integriert.

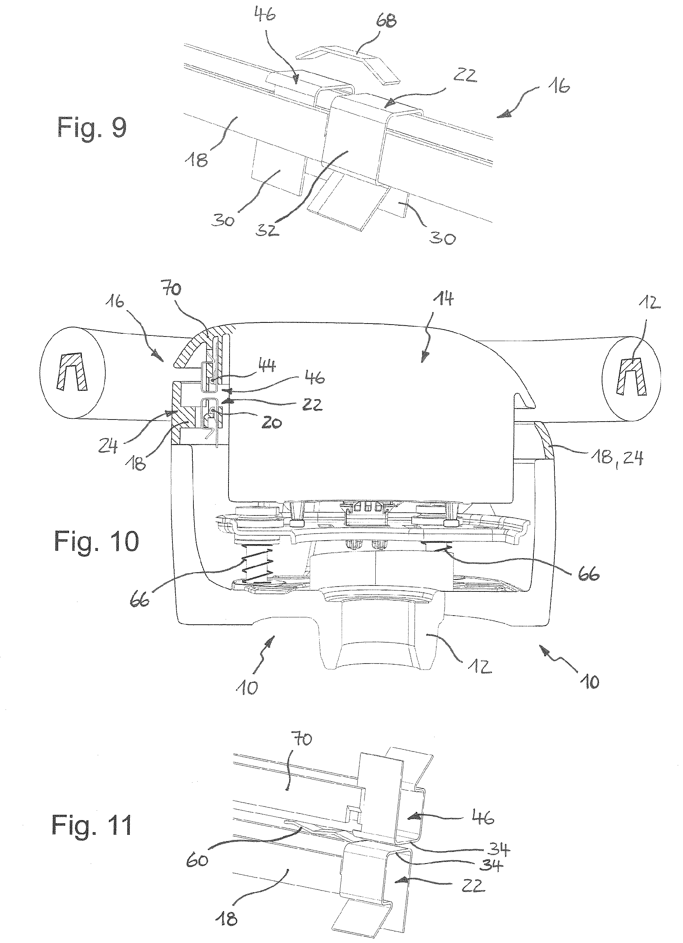

Die Figur 9 zeigt eine Ausführungsvariante, bei der keiner der beiden Clips 22, 46 eine elastische Lasche 60, 64 aufweist. Die Rückstellung der Hupenbaugruppe 16 in ihre Grundstellung erfolgt in diesem Fall durch separate Rückstellelemente, wie zum Beispiel in Figur 2 dargestellte Schraubenfedern 66. Die elektrische Kontaktierung übernimmt ein elektrisches Leiterstück 68, welches beispielsweise an einer den Clips 22, 46 zugewandten Seite des Betätigungselements 62 angebracht ist (siehe auch Figur 2).

Die Figuren 10 und 11 zeigen schließlich zwei Ausführungsvarianten, welche sich von den zuvor beschriebenen Hupenbaugruppen 16 dadurch unterscheiden, dass die beiden Clips 22, 46 nicht an demselben Trägerelement 18 angebracht sind.

Stattdessen ist ein weiteres, elektrisch nicht-leitfähiges Trägerelement 70 vorgesehen, wobei der weitere langgestreckte, flexible elektrische Leiter 44 an dem weiteren Trägerelement 70 montiert und der weitere elektrisch leitende Clip 46 an diesem weiteren Trägerelement 70 verrastet ist.

Gemäß den Figuren 10 und 11 ist das Trägerelement 18 einstückig in die Lenkvorrichtungsblende 24 integriert (analog zu den zuvor beschriebenen Ausführungsformen), während das weitere Trägerelement 70 einstückig mit dem Gassackmodul 14, insbesondere einem Modulgehäuse des Gassackmoduls 14 ausgebildet ist.

Bei einer Betätigung der Fahrzeughupe werden die Clips 22, 46 aufeinander zu bewegt, sodass der elektrische Kontaktschluss in diesem Fall durch eine Berührung der Stege 34 der U-förmigen Clips 22, 46 erfolgt.

Die in Figur 11 dargestellte Hupenbaugruppe 16 11 unterscheidet sich von der Ausführungsform gemäß Figur 10 lediglich dadurch, dass der elektrisch leitende Clip 22 eine elastische Lasche 60 aufweist, welche die Hupenbaugruppe 16 in ihre Grundstellung beaufschlagt, jedoch keine elektrische Kontaktierungsfunktion hat.

## Patentansprüche

1. Hupenbaugruppe einer Fahrzeuglenkvorrichtung (10), mit
einem elektrisch nicht-leitfähigen Trägerelement (18),
einem langgestreckten, flexiblen elektrischen Leiter (20), der am Trägerelement (18) angeordnet ist,
einem elektrisch leitenden Bauteil, das mit dem flexiblen elektrischen Leiter (20) in Kontakt steht und einen ersten Hupenkontakt bildet, sowie
einem zweiten Hupenkontakt, der in einer Grundstellung der Hupenbaugruppe (16) vom ersten Hupenkontakt beabstandet und in einer Betätigungsstellung der Hupenbaugruppe (16) mit dem ersten Hupenkontakt elektrisch verbunden ist,
**dadurch gekennzeichnet, dass** das elektrisch leitende Bauteil als elektrisch leitender Clip (22) ausgebildet und am Trägerelement (18) verrastet ist, um den ersten Hupenkontakt an einer beliebigen, gewünschten Stelle entlang des flexiblen elektrischen Leiters (20) zu realisieren.

2. Hupenbaugruppe nach Anspruch 1, **dadurch gekennzeichnet, dass** der langgestreckte, flexible elektrische Leiter (20) ein Kabel ist, welches eine elektrisch leitende Ader (36) und in einer Längsrichtung (26) des Leiters (20) zumindest abschnittsweise eine elektrisch isolierende Ummantelung (38) aufweist.

3. Hupenbaugruppe nach Anspruch 2, **dadurch gekennzeichnet, dass** der Clip (22) eine Schneide (42) zum Einschneiden in die elektrisch isolierende Ummantelung (38) aufweist, wobei die Schneide (42) im zusammengebauten Zustand der Hupenbaugruppe (16) die elektrisch leitende Ader (36) berührt.

4. Hupenbaugruppe nach Anspruch 2, **dadurch gekennzeichnet, dass** der Clip (22) eine Federzunge (40) aufweist und das Kabel im Montagebereich des Clips (22) ohne elektrisch isolierende Ummantelung (38) ausgebildet ist, wobei die Federzunge (40) im zusammengebauten Zustand der Hupenbaugruppe (16) die elektrisch leitende Ader (36) berührt.

5. Hupenbaugruppe nach einem der vorhergehenden Ansprüche, **dadurch gekennzeichnet, dass** der elektrisch leitende Clip (22) eine einstückig angeformte, elastische Lasche (60) zur Beaufschlagung der Hupenbaugruppe (16) in ihre Grundstellung und/oder zur elektrischen Kontaktierung des zweiten Hupenkontakts aufweist.

6. Hupenbaugruppe nach einem der vorhergehenden Ansprüche, **dadurch gekennzeichnet, dass** der Clip (22) ein Biegestanzteil aus Blech ist.

7. Hupenbaugruppe nach einem der vorhergehenden Ansprüche, **dadurch gekennzeichnet, dass** ein weiterer langgestreckter, flexibler elektrischer Leiter (44) vorgesehen ist, wobei der zweite Hupenkontakt durch einen weiteren elektrisch leitenden Clip (46) gebildet ist, der mit dem weiteren langgestreckten, flexiblen elektrischen Leiter (44) in Kontakt steht.

8. Hupenbaugruppe nach Anspruch 7, **dadurch gekennzeichnet, dass** die beiden langgestreckten, flexiblen elektrischen Leiter (20, 44) an demselben elektrisch nicht-leitfähigen Trägerelement (18) angeordnet und die beiden elektrisch leitenden Clips (22, 46) an demselben elektrisch nicht-leitfähigen Trägerelement (18) verrastet sind.

9. Hupenbaugruppe nach Anspruch 7, **dadurch gekennzeichnet, dass** ein weiteres elektrisch nicht-leitfähiges Trägerelement (70) vorgesehen ist, wobei der weitere langgestreckte, flexible elektrische Leiter (44) an dem weiteren Trägerelement (70) angeordnet und der weitere elektrisch leitende Clip (46) an dem weiteren Trägerelement (70) verrastet ist.

10. Fahrzeuglenkvorrichtung mit einem Lenkvorrichtungsskelett (12), einem Gassackmodul (14) und einer Hupenbaugruppe (16) nach einem der vorhergehenden Ansprüche, **dadurch gekennzeichnet, dass** wenigstens ein Trägerelement (18, 70) der Hupenbaugruppe (16) einstückig mit einer skelettfesten Lenkvorrichtungsblende (24) oder einem Modulgehäuse des Gassackmoduls (14) ausgeführt ist.

11. Verfahren zur Herstellung einer Hupenbaugruppe (16) nach einem der Ansprüche 1 bis 9, umfassend die folgenden Schritte:
a) Bereitstellen eines nicht-leitfähigen Trägerelements (18);
b) Montage des langgestreckten, flexiblen elektrischen Leiters (20) am Trägerelement (18); und
c) Zuführen des elektrisch leitenden Clips (22) an einer beliebigen, gewünschten Stelle entlang des flexiblen elektrischen Leiters (20) in einer quer zur Längsrichtung (26) des elektrischen Leiters (20) verlaufenden Montagerichtung (28) bis der Clip (22) in einer Endmontageposition mit dem Trägerelement (18) verrastet, wobei der Clip (22) beim Zuführen in Montagerichtung (28) mit dem elektrischen Leiter (20) einen elektrischen Kontakt ausbildet.

12. Verfahren nach Anspruch 11, **dadurch gekennzeichnet, dass** der langgestreckte, flexible elektrische Leiter (20) ein Kabel ist, welches eine elektrisch leitende Ader (36) und in einer Längsrichtung (26) des Leiters (20) eine elektrisch isolierende Ummantelung (38) aufweist, wobei der zugeordnete Clip (22) eine Schneide (42) aufweist, welche im Schritt c) in die Ummantelung (38) einschneidet, bis sie in der Endmontageposition die elektrisch leitende Ader (36) berührt.

13. Verfahren nach Anspruch 11, **dadurch gekennzeichnet, dass** der langgestreckte, flexible elektrische Leiter (20) ein Kabel ist, welches eine elektrisch leitende Ader (36) und in einer Längsrichtung (26) des Leiters (20) eine elektrisch isolierende Ummantelung (38) aufweist, wobei die Ummantelung (38) im Montagebereich des zugeordneten Clips (22) ausgespart ist und der Clip (22) eine Federzunge (40) aufweist, welche im Schritt c) gegen die freiliegende, elektrisch leitende Ader (36) beaufschlagt wird und die Ader (36) in der Endmontageposition berührt.

## Claims

1. A horn assembly of a vehicle steering apparatus (10) comprising
an electrically non-conductive carrier element (18),
an elongate flexible electrical conductor (20) arranged on the carrier element (18),
an electrically conducting component which is in contact with the flexible electrical conductor (20), and forms a first horn contact, and
a second horn contact which is at a distance from the first horn contact in a basic position of the horn assembly (16) and is electrically connected to the first horn contact in an operating position of the horn assembly (16),
**characterized in that** the electrically conducting component is in the form of an electrically conducting clip (22) and is latched to the carrier element (18) to realize the first horn contact at any desired position along the flexible electrical conductor (20).

2. The horn assembly according to claim 1, **characterized in that** the elongate flexible electrical conductor (20) is a cable which includes an electrically conducting core (36) and, in a longitudinal direction (26) of the conductor (20), at least in portions an electrically insulating coating (38).

3. The horn assembly according to claim 2, **characterized in that** the clip (22) has a cutting edge (42) for cutting into the electrically insulating coating (38), the cutting edge (42) contacting the electrically conducting core (36) in the assembled state of the horn assembly (16).

4. The horn assembly according to claim 2, **characterized in that** the clip (22) has a flexible tongue (40) and the cable is formed without an electrically insulating coating (38) in the mounting region of the clip (22), the flexible tongue (40) contacting the electrically conducting core (36) in the assembled state of the horn assembly (16).

5. The horn assembly according to any one of the preceding claims, **characterized in that** the electrically conducting clip (22) includes an integrally formed elastic tab (60) for urging the horn assembly (16) into its basic position and/or for electrically contacting the second horn contact.

6. The horn assembly according to any one of the preceding claims, **characterized in that** the clip (22) is a bent and punched part made of sheet metal.

7. The horn assembly according to any one of the preceding claims, **characterized in that** a further elongate flexible electrical conductor (44) is provided, wherein the second horn contact is formed by a further electrically conducting clip (46) which is in contact with the further elongate flexible electrical conductor (44).

8. The horn assembly according to claim 7, **characterized in that** the two elongate flexible electrical conductors (20, 44) are arranged on the same electrically non-conductive carrier element (18) and the two electrically conducting clips (22, 46) are latched to the same electrically non-conductive carrier element (18).

9. The horn assembly according to claim 7, **characterized in that** a further electrically non-conductive carrier element (70) is provided, wherein the further elongate flexible electrical conductor (44) is arranged on the further carrier element (70) and the further electrically conducting clip (46) is latched to the further carrier element (70).

10. A vehicle steering apparatus comprising a steering apparatus skeleton (12), an airbag module (14) and a horn assembly (16) according to any one of the preceding claims, **characterized in that** at least one carrier element (18, 70) of the horn assembly (16) is formed integrally with a steering apparatus hider (24) fixed to the skeleton or a module housing of the airbag module (14).

11. A method for producing a horn assembly (16) according to any one of the claims 1 to 9, comprising the following steps of:
a) providing a non-conductive carrier element (18);
b) mounting the elongate flexible electrical conductor (20) onto the carrier element (18); and
c) feeding the electrically conducting clip (22) at any desired position along the flexible electrical conductor (20) in a mounting direction (28) extending transversely to the longitudinal direction (26) of the electrical conductor (20), until the clip (22) latches with the carrier element (18) in a final mounting position, wherein the clip (22), when fed in the mounting direction (28), forms an electrical contact with the electrical conductor (20).

12. The method according to claim 11, **characterized in that** the elongate flexible electrical conductor (20) is a cable which has an electrically conducting core (36) and an electrically insulating coating (38) in a longitudinal direction (26) of the conductor (20), wherein the assigned clip (22) includes a cutting edge (42) which, in step c), cuts into the coating (38) until it contacts the electrically conducting core (36) in the final mounting position.

13. The method according to claim 11, **characterized in that** the elongate flexible electrical conductor (20) is a cable which has an electrically conducting core (36) and an electrically insulating coating (38) in a longitudinal direction (26) of the conductor (20), wherein the coating (38) is left blank in the mounting region of the assigned clip (22) and the clip (22) has a flexible tongue (40) which, in step c), is urged against the exposed electrically conducting core (36) and contacts the core (36) in the final mounting position.

## Revendications

1. Ensemble d'avertisseur sonore d'un dispositif de direction de véhicule (10), comprenant
un élément de support (18) non conducteur de l'électricité,
un conducteur électrique flexible allongé (20) disposé sur l'élément de support (18),
un élément électriquement conducteur qui est en contact avec le conducteur électrique flexible (20) et qui forme un premier contact d'avertisseur sonore, et
un deuxième contact d'avertisseur sonore qui est espacé du premier contact d'avertisseur sonore dans une position de base de l'ensemble d'avertisseur sonore (16) et qui est connecté électriquement au premier contact d'avertisseur sonore dans une position d'actionnement de l'ensemble d'avertisseur sonore (16),
**caractérisé en ce que** le composant électriquement conducteur est réalisé sous la forme d'un clip électriquement conducteur (22) et est encliqueté sur l'élément de support (18) afin de réaliser le premier contact d'avertisseur sonore à un endroit quelconque souhaité le long du conducteur électrique flexible (20).

2. Ensemble d'avertisseur sonore selon la revendication 1, **caractérisé en ce que** le conducteur électrique flexible allongé (20) est un câble, lequel présente un brin électriquement conducteur (36) et, dans une direction longitudinale (26) du conducteur (20), au moins par sections, une gaine électriquement isolante (38).

3. Ensemble d'avertisseur sonore selon la revendication 2, **caractérisé en ce que** le clip (22) présente une lame (42) pour l'incision dans la gaine électriquement isolante (38), pour lequel la lame (42) est en contact avec le fil électriquement conducteur (36) dans un état assemblé de l'ensemble d'avertisseur sonore (16).

4. Ensemble d'avertisseur sonore selon la revendication 2, **caractérisé en ce que** le clip (22) présente une languette élastique (40) et le câble est réalisé sans gaine électriquement isolante (38) dans la zone de montage du clip (22), pour lequel la languette élastique (40) est en contact avec le fil électriquement conducteur (36) dans un état assemblé de l'ensemble d'avertisseur sonore (16).

5. Ensemble d'avertisseur sonore selon l'une des revendications précédentes, **caractérisé en ce que** le clip (22) conducteur électrique présente une languette (60) élastique moulée d'un seul tenant pour solliciter l'ensemble d'avertisseur sonore (16) dans sa position de base et/ou pour établir un contact électrique avec le deuxième contact d'avertisseur sonore.

6. Ensemble d'avertisseur sonore selon l'une quelconque des revendications précédentes, **caractérisé en ce que** le clip (22) est une pièce réalisée par pliage de tôle découpée.

7. Ensemble d'avertisseur sonore selon l'une quelconque des revendications précédentes, **caractérisé en ce qu'**un autre conducteur électrique flexible allongé (44) est prévu, pour lequel le deuxième contact d'avertisseur sonore est formé par un autre clip électriquement conducteur (46), lequel est en contact avec l'autre conducteur électrique flexible allongé (44).

8. Ensemble d'avertisseur sonore selon la revendication 7, **caractérisé en ce que** les deux conducteurs électriques flexibles allongés (20, 44) sont disposés sur le même élément de support non conducteur électrique (18) et les deux clips conducteurs électriques (22, 46) sont encliquetés sur le même élément de support non conducteur électrique (18).

9. Ensemble d'avertisseur sonore selon la revendication 7, **caractérisé en ce qu'**il est prévu un autre élément de support (70) non conducteur de l'électricité, pour lequel l'autre conducteur électrique (44) allongé et flexible est disposé sur l'autre élément de support (70) et l'autre clip (46) conducteur de l'électricité est encliqueté sur l'autre élément de support (70).

10. Dispositif de direction de véhicule comprenant une armature de dispositif de direction (12), un module de coussin gonflable (14) et un ensemble d'avertisseur sonore (16) selon l'une des revendications précédentes, **caractérisé en ce qu'**au moins un élément de support (18, 70) de l'ensemble d'avertisseur sonore (16) est réalisé d'une seule pièce avec un cache du dispositif de direction (24) solidaire de l'armature ou d'un boîtier de module du module de coussin gonflable (14).

11. Procédé de fabrication d'un ensemble d'avertisseur sonore (16) selon l'une quelconque des revendications 1 à 9, comprenant les étapes suivantes :
a) Fourniture d'un élément de support non conducteur électriquement (18);
b) Montage du conducteur électrique flexible allongé (20) sur l'élément de support (18) ; et
c) Guidage du clip électriquement conductrice (22) à un endroit quelconque souhaité le long du conducteur électrique flexible (20) dans une direction de montage (28) s'étendant transversalement à la direction longitudinale (26) du conducteur électrique (20) jusqu'à ce que le clip (22) s'enclenche avec l'élément de support (18) dans une position de montage finale, pour lequel le clip (22) formant un contact électrique avec le conducteur électrique (20) lors de l'amenée dans la direction de montage (28).

12. Procédé selon la revendication 11, **caractérisé en ce que** le conducteur électrique flexible allongé (20) est un câble, lequel comprend un fil électriquement conducteur (36) et une gaine électriquement isolante (38) dans une direction longitudinale (26) du conducteur (20), pour lequel le clip (22) associé comprend une lame (42) qui, à l'étape c), coupe dans la gaine (38) jusqu'à ce qu'il entre en contact avec le fil électriquement conducteur (36) dans la position de montage finale.

13. Procédé selon la revendication 11, **caractérisé en ce que** le conducteur électrique flexible allongé (20) est un câble, lequel présente un brin électriquement conducteur (36) et une gaine électriquement isolante (38) dans une direction longitudinale (26) du conducteur (20), pour lequel la gaine (38) est dénudée dans la zone de montage du clip (22) associé et le clip (22) présente une languette élastique (40) qui, à l'étape c), est sollicitée contre le brin (36) conducteur électrique exposé et touche le brin (36) dans la position de montage finale.
